# EUROPEAN PATENT APPLICATION

(11) **EP 4 507 331 A1**
(43) Date of publication of application: **12.02.2025**
(21) Application number: 23190829.4
(22) Date of filing: 10.08.2023
(51) Int. Cl.: H04R 25/00, G06F 21/32, H04L 9/00, H04L 9/40, H04W 12/33

(54) **METHOD FOR AUTHENTICATING A USER OF A BINAURAL HEARING SYSTEM**

(71) Applicant: Sonova AG, 8712 Stäfa (CH)
(72) Inventor: Maksyagin, Alexander, 8712 Stäfa (CH); von Tessin, Michael, 8712 Stäfa (CH); Wojcieszyn, Filip, 8712 Stäfa (CH)
(74) Representative: Schwan Schorer & Partner mbB

(57) **Abstract**

There is provided a method for authenticating a user (12) of a binaural hearing system (10) comprising two hearing devices (10A, 10B), the method comprising: registering the binaural hearing system with a relying party (16) as a single authenticator for authenticating the user, thereby generating authentication data; synchronizing the two hearing devices regarding the authentication data; and using either one of the two hearing devices as the single authenticator by utilizing the authentication data to authenticate the user to the relying party in response to a request by the relying party.

## Description

The invention relates to a method for authenticating a user of a binaural hearing system.

Multi-factor authentication (MFA), and its subset, two-factor authentication (2FA), are becoming a best security practice to protect access to user accounts. The most secure state-of-the art method for MFA are hardware tokens/authenticators.

Similarly, there is a strong push in the industry towards getting rid of passwords, which also requires authenticators.

An authenticator, in a broad sense, is a cryptographic entity, usually in the form of a hardware token, that can register a user with a given application (relying party) and later assert possession of the registered key credential, when requested by the relying party. Authenticators normally would report their type and security characteristics via attestation, and hence a wide spectrum of such devices, with varying capabilities, exist.

While hardware tokens are preferable in terms of security, they also have some disadvantages: One needs to have the hardware token at hand whenever one wants to get access to one's accounts. Further, the hardware token can get lost or stolen and misused, without the user typically noticing this at least for a while. Also, hardware tokens often have a limited user interface, e.g., to confirm identity/presence of user, enter/display codes, etc. Other drawbacks of dedicated devices like a hardware token are that they normally have to be bought so they present an additional cost for the user and that the dedicated device generates additional environmental impact and waste.

EP 3 236 674 A1 relates to a hearing device employing a Trusted Platform Module (TPM) which allows the hearing device to be used for cryptographic signatures based on a private key or a symmetric key kept on the hearing device, wherein the manufacturer of the hearing device may act as a certification instance. The hearing device may be part of binaural system. It is mentioned that the security function components may be distributed onto both hearing devices of a binaural system. The user of the hearing device may be authenticated to the hearing device by biometric features of the user or by the user's physical proximity to the hearing device. It is also mentioned that the hearing device may serve to replace security token devices.

US 2012/0282877 A1 relates to a method wherein a communication device is unlocked by a separate key device connected to the communication device. The key device may be a smart hearing aid device placed into a user's ear canal.

EP 3 709 115 A1 relates to a binaural hearing system wherein an identification of a user wearing the binaural hearing system may be based on a binaural decision based on user identification signals from hearing devices located at left and right ears of the user or based on voice characteristics and/or acoustic system characteristics from hearing devices at both ears.

US 2018/0113673 A1 relates to a method of in-ear control of remote devices by receiving, by a microphone of an in-ear device, audio signals from an audio source, the in-ear device inserted into a wearer's ear; determining a command based on the audio signals using a speech recognition technique; performing a voice recognition technique to determine an identity of the audio source; authenticating the command based on the identity of the audio source; and transmitting a signal to a remote electronic device, the signal configured to cause the remote electronic device to execute the command.

EP 3 334 186 A1 relates to a method of retrieving data from a hearing device by a user application on a server device in a secure session, such as an integrity-protected, encrypted, authenticated and/or mutually authenticated session.

WO 2014/191040 A1 relates to a method of unlocking a portable electronic device when a preregistered hearing device is detected as being in wireless communication range of the portable electronic device.

US 2021/0393168 A1 relates to a method of user authentication via in-ear acoustic measurements including detecting an otic response to an acoustic signal emitted by the in-ear device.

It is an object of the invention to provide for a method, which allows authenticating a user of a binaural hearing system in a convenient and secure way.

According to the invention, these objects are achieved by a method as defined in claims 1 and 8, respectively.

The invention is beneficial in that, by utilizing a binaural hearing system as a single authenticator, the user does not need to remember to carry along the authenticator since the hearing system usually anyway will be worn by the user and the authenticator cannot be easily lost or stolen and a loss would be noticed immediately; further, a binaural hearing system provides an acoustic user interface (microphone and loudspeaker) which allows for concealed user interaction and allows for biometric identification via its direct and seamless biometric body access via the ear canal. The solution of claim 1 provides in a convenient way for a backup token via the other hearing device if one of the two hearing devices is lost or defective. The solution of claim 8, by requiring utilization of both hearing devices for authentication, provides for improved security.

A first aspect of the invention, as defined in claim 1, relates to a method for authenticating a user of a binaural hearing system comprising two hearing devices, the method comprising: registering the binaural hearing system with a relying party (16) as a single authenticator for authenticating the user, thereby generating authentication data; synchronizing the two hearing devices regarding the authentication data; and using either one of the two hearing devices as the single authenticator by utilizing the authentication data to authenticate the user to the relying party in response to a request by the relying party.

According to one example, only one or both of the hearing devices is/are involved in said registering of the binaural hearing system.

The registering of the binaural hearing system may include a verification that the user presently has physical access to the hearing device(s) involved in said registering.

According to one example, the using either one of the hearing devices as the single authenticator includes a verification that the user presently has physical access to the hearing device that is used as the single authenticator.

For example, the verification that the user presently has physical access to the hearing device(s) includes a detection that the respective hearing device is worn in an ear and/or a biometric detection that the respective hearing device is worn in a predetermined ear.

Alternatively or in addition, the verification that the user presently has physical access to the hearing device(s) may include an action from the user on the respective hearing device, such as a button press, in response to a notification to the user.

According to one example, the synchronizing of the two hearing devices regarding the authentication data occurs via direct communication between the two hearing devices.

According to another example, the synchronizing of the two hearing devices regarding the authentication data occurs via a client communicating with each of the two hearing devices and with the relying party.

According to still another example, the synchronizing of the two hearing devices regarding the authentication data occurs via a cloud service.

According to one example, the authentication data includes an authentication key which is used to sign data transmitted from the hearing devices to the relying party. In particular, the authentication key may be the private key of a public-private key pair generated by one of the hearing devices (10A, 10B) during said registering.

According to one example, the authentication key is stored on both hearing devices.

According to another example, the authentication key is encrypted by one of the hearing devices and then stored on a client or in a cloud.

A second aspect of the invention, as defined in claim 8, relates to a method for authenticating a user of a binaural hearing system comprising two hearing devices, the method comprising: registering the binaural hearing system with a relying party as a single authenticator for authenticating the user, thereby generating authentication data; using both hearing devices as the single authenticator by utilizing the authentication data to authenticate the user to the relying party in response to a request by the relying party, wherein said using both hearing devices as the single authenticator includes detecting a physical proximity of the two hearing devices.

According to one example, the registering of the binaural hearing system includes a verification that the user presently has physical access to both hearing devices.

According to one example, the using both hearing devices as the single authenticator includes a verification that the user presently has physical access to both hearing devices.

According to one example, verification that the user presently has physical access to both hearing devices includes at least one of:
a detection that each hearing device is worn in an ear,
a biometric detection that each hearing device is worn in a predetermined ear,
a detection that a sensor signal detected by each of the hearing devices, such as a heartbeat detected by PPG sensor and/or a motion detected by an accelerometer, is correlated or synchronous; and
an action from the user on the respective hearing device, such as a button press, in response to a notification to the user.

According to one example, the detecting a physical proximity of the two hearing devices includes at least one of:
detecting wireless connectivity between the hearing devices,
measuring a distance between the two hearing devices, such as via GPS or via a distance bounding protocol of a wireless connection between the hearing devices, and detecting that the measured distance is below a distance threshold,
detecting that the two hearing devices are connected to the same charging device, and
detecting that the two hearing devices listen to the same ambient sound.

According to one example, the authentication data includes an authentication key which is used to sign data transmitted from the hearing devices to the relying party. In particular, the authentication key may be the private key of a public-private key pair generated by one of the hearing devices during said registering.

According to one example, the authentication key is stored on that one of the hearing devices which generates the key.

According to another example, the authentication key is encrypted by that one of the hearing devices which generates the key and then is transmitted to the other one of the hearing devices where it is stored.

According to one example, the public-private key pair is generated based on first key material data stored on one of the hearing devices and on second key material data stored on the other one of the hearing devices.

The following examples apply to both aspects of the invention.

According to one example, communication between the hearing devices and the relying party occurs via a client. In particular, the client may be implemented as an app on a smartphone or on a personal computer.

According to one example, the relying party is implemented as part of a user account offered by the manufacturer of the hearing system.

According to one example, the method utilizes a standard web-based authenticator protocol, such as WebAuthn.

### Preferred embodiments of the invention are defined in the dependent claims.

Hereinafter, examples of the invention will be illustrated by reference to the attached drawings, wherein:
- Fig. 1: is a schematic illustration of an example of the use of a binaural hearing system as an authenticator for a user; and
- Figs. 2-7: are schematic diagrams illustrating different examples of authentication procedures for a user of a binaural hearing system with regard to a relying party, utilizing a client in-between, wherein the examples are shown integrated with WebAuthn (FIDO2) flows (each diagram extends across two sheets, the first one illustrating the upper part of the diagram being labeled "a" and second one illustrating the lower part of the diagram being labelled "b").

A "hearing device" as used hereinafter is any ear level element suitable for reproducing sound by stimulating a user's hearing, such as an electroacoustic hearing aid, a bone conduction hearing aid, an active hearing protection device, a hearing prostheses element such as a cochlear implant, a wireless headset, an earbud, an earplug, an earphone, etc.

A "binaural hearing system" comprises a hearing device for each ear, wherein the hearing devices are able to communicate with each other, e.g., via a wireless link.

"Authentication data" as used hereinafter include data required for utilizing a hearing device as an authenticator for a relying party, such as a key, in particular a private key and a public key of a public-private key pair, user information, relying party information, etc.

The present invention suggests to register a binaural hearing system as a single authenticator (for the user of the hearing system) with the relying party.

According to a first aspect, either one of the hearing devices of the binaural hearing system may be used in response to an authentication request by the relying party, wherein authentication data generated by the registration are utilized. In this case, the hearing devices are synchronized regarding the authentication data so that either one of the hearing devices possesses all information required for authentication.

The registering of the binaural hearing system with the relying party may include a verification that the user presently uses, i.e., has physical access to, the hearing device(s) involved in the registering. In particular, only one of the two hearing devices may be involved in registering.

Also the subsequent use of one of the two hearing devices as the single authenticator in response to a request by the relying party may include a verification that the user presently uses, i.e., has physical access to, that hearing device. In particular, such verification may include a detection that the hearing device is worn in an ear and/or a biometric detection that the hearing device is worn in a predetermined ear.

The synchronizing of the two hearing devices regarding the authentication data may occur via direct communication between the two hearing devices. Alternatively, the synchronizing of the two hearing devices regarding the authentication data may occur via a client communicating with each of the two hearing devices and with the relying party. According to a further alternative, the synchronizing of the two hearing devices regarding the authentication data occurs via a cloud service.

The authentication data may include an authentication key which is used to sign data transmitted from the hearing devices to the relying party. In particular, the authentication key may be the private key of a public-private key pair generated by one of the hearing devices during said registering, with the public key being transmitted to the relying party. According to one example, the authentication key may be stored on both hearing devices. According to an alternative, the authentication key may be encrypted by one of the hearing devices and then stored on a client or in the cloud.

According to a second aspect, both hearing devices of the binaural hearing system may be used as the single authenticator in response to an authentication request by the relying party, wherein authentication data generated by the registration are utilized. In this case, physical proximity of the two hearing devices is detected.

The registering of the binaural hearing system may include a verification that the user presently uses, i.e., has physical access to, both hearing devices. Also the subsequent use of both hearing devices as the single authenticator in response to a request by the relying party may include a verification that the user presently uses, i.e., has physical access to, both hearing devices. In both cases, such verification that the user presently uses both hearing devices may include at least one of: a detection that each hearing device is worn in an ear; a biometric detection that each hearing device is worn in a predetermined ear; and a detection that a sensor signal detected by each of the hearing devices, such as a heartbeat detected by a PPG sensor and/or a motion detected by an accelerometer, is correlated or synchronous.

The detecting of physical proximity of the two hearing devices may include at least one of: detecting wireless connectivity between the hearing devices; measuring a distance between the two hearing devices, such as via GPS or via a distance bounding protocol of a wireless connection between the hearing devices, and detecting that the measured distance is below a distance threshold; detecting that the two hearing devices are connected to the same charging device; and detecting that the two hearing devices listen to the same ambient sound.

As for the first aspect discussed above, the authentication data may include an authentication key which is used to sign data transmitted from the hearing devices to the relying party; in particular, the authentication key may be the private key of a public-private key pair generated by one of the hearing devices during said registering, with the public key being transmitted to the relying party. The authentication key may be stored on that one of the hearing devices which generates the key. Alternatively, the authentication key may be encrypted by that one of the hearing devices which generates the key and then is transmitted to the other one of the hearing devices where it is stored. According to a further alternative, the public-private key pair may be generated based on first key material data stored on one of the hearing devices and on second key material data stored on the other one of the hearing devices.

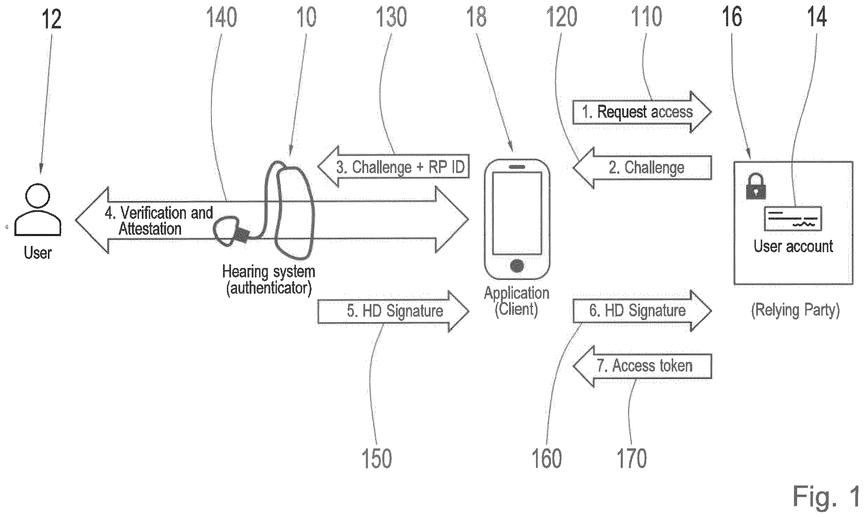

For both the first and second aspect, the communication between the hearing devices and the relying party may occur via a client. In particular, the client may be implemented as an app on a smartphone. Further, the relying party is implemented in an account of the manufacturer of the hearing system. As illustrated in the examples shown in Figs. 1 to 7, the authentication method may utilize a standard web-based authenticator protocol, such as WebAuthn.

Fig. 1 is a schematic illustration of an example of the use of a binaural hearing system 10 comprising two hearing devices as an authenticator for a user 12 of the binaural hearing system 10 with regard to an entity labeled "relying party" 16, which protects user resources like a user account 14, via an application / client 18 implemented on a suitable accessory device, such as a smartphone. The client 18 is an application for accessing protected user resources on behalf of the user 12. For example, the user account 14 and the relying party 16 may be implemented by the manufacturer of the hearing system 10 as web services.

The authentication procedure may utilize a standard authenticator protocol like WebAuthn which is a web-based API and which forms part, for example, of the FIDO2 specifications. The examples shown in Figs. 1-7 involve WebAuthn flows.

In the example of Fig. 1, the client 18 requests in step 110 on behalf of the user 12 from the relying party 16 to grant access to user resources 14. In response, the relying party 16 sends in step 120 a request in the form of a challenge to the client 18 which in step 130 forwards the challenge, together with an ID of the relying party 16 to the binaural hearing system 10. The binaural hearing system 10, in turn, in step 140 provides for a verification of the user 12 and, if the user verification is successful (which means that user 12 has provided the consent to the access the user resources 14), further provides for a (cryptographic) attestation of the user's consent to the client 18. This may happen by signing appropriate data ("authenticator data") with a digital signature of the hearing system 10 and sending the signed data (which form an attestation) to the client 18 (step 150) which forwards the signed data / attestation to the relying party 16 (step 160). If the relying party 16 can verify the signature of the hearing system 10 it will provide an access token to the client 18, allowing the client 18 to access the user resources 14 (step 170).

The process of Fig. 1 requires that the hearing system 10 already has been registered with the relying party 16 as an authenticator prior to the process of Fig. 1, so that the relying party 16 can verify the signature (or, more generally, the attestation provided by the hearing system 10). For example, the signature may use a private key of a private-public key pair generated by the hearing system and the relying party 16 may use the public key for verifying the signature.

After registration, the user 12 is enabled by the process of Fig. 1 to provide his/her consent to the relying party 16 that the client 18 may access protected user resources 14, wherein the hearing system 10 serves to attest to the relying party 16 that the user 12 has provided his/her access consent.

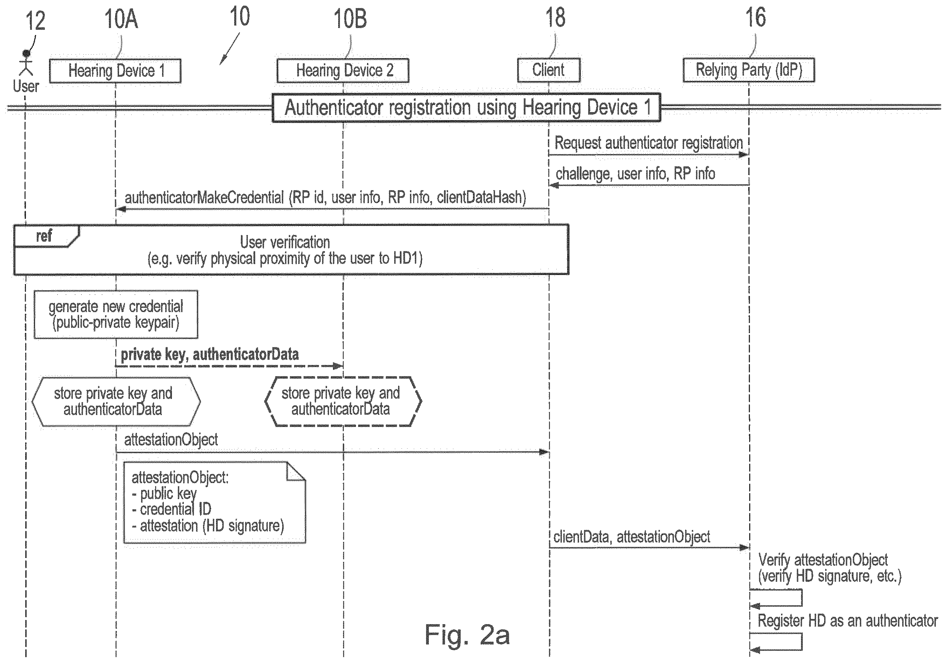

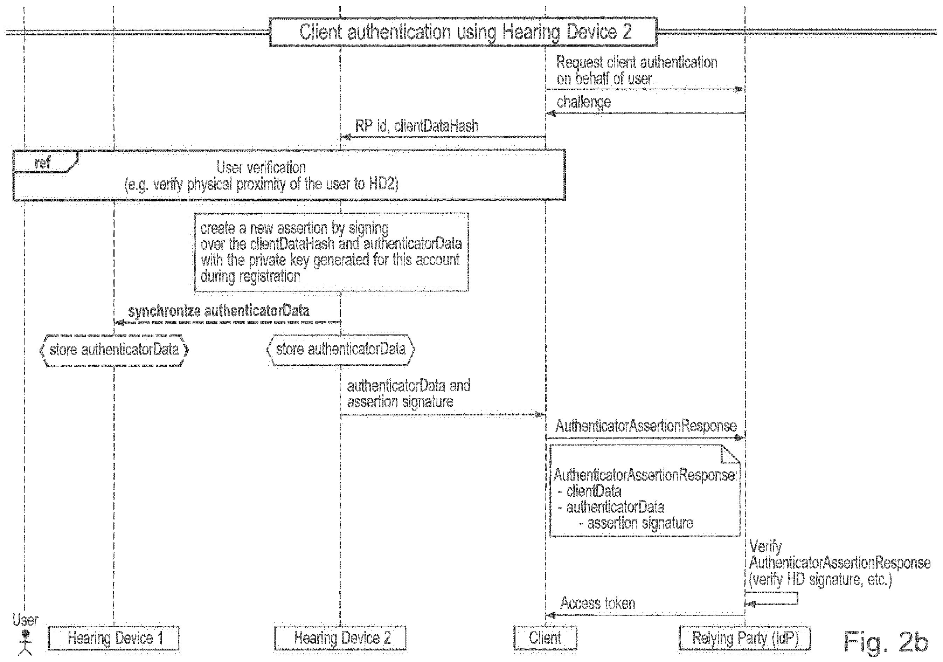

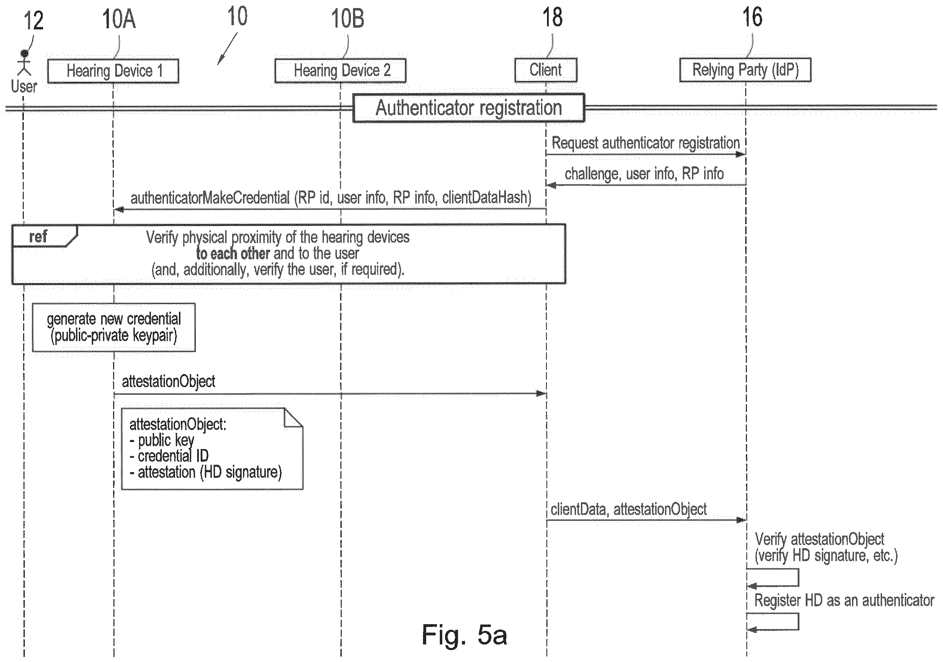

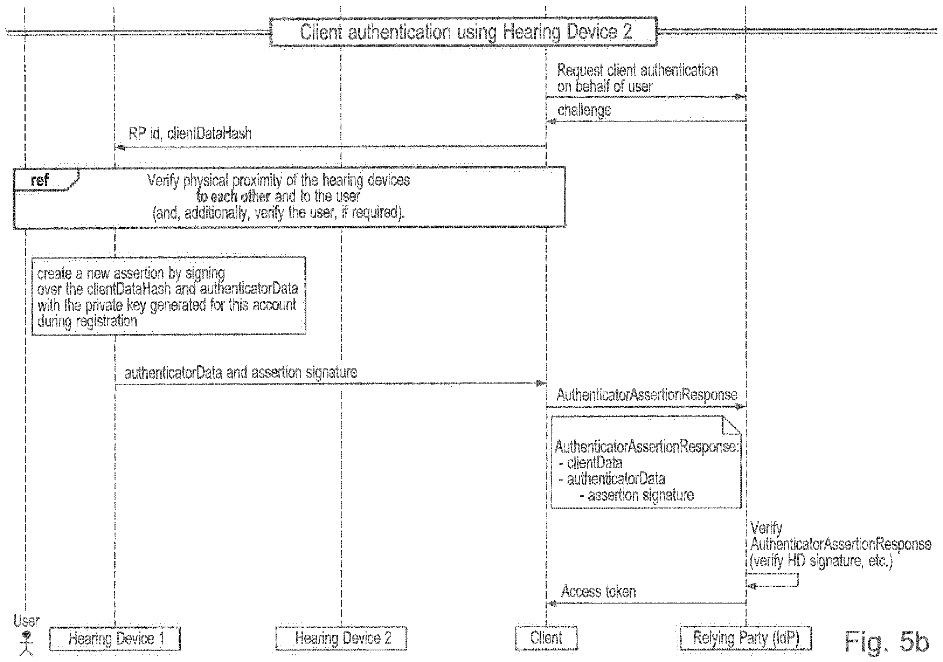

Various examples of authentication processes using a binaural hearing system as a single authenticator are illustrated by the message sequence charts of Figs. 2 to 7, wherein in each flow diagram the upper half illustrates how the binaural hearing system 10 consisting of two hearing devices 10A, 10B registers with the relying party 16 whereas the lower half relates to the actual authentication procedure using either one of the two hearing devices (Figs. 2 to 4) or both hearing devices (Figs. 5 to 7) in response to a request by the relying party 16. All examples use a private-public key pair generated by the hearing system 10.

Figs. 2 to 4 illustrate examples of the first aspect, i.e., either one of the hearing devices may be used for the authentication, with the hearing devices being synchronized with regard to the authentication data.

In the example of Fig. 2 the authentication data, including a private key, is stored on both hearing devices 10A, 10B, with the authentication data being synchronized directly between the hearing devices 10A, 10B.

The registering of the binaural hearing system 10 with the relying party 16 as illustrated in the upper part of Fig. 2 utilizes only one of the two hearing devices (here hearing device 10A) includes a verification that the user presently uses the hearing device 10A involved in the registering, e.g. by detecting physical proximity of the user 12 to the hearing device 10A. To start the registration procedure, the client 18 sends an authenticator registration request to the relying party 16 which, in turn, sends a request in the form of a "challenge", including user information and relying party information, to the client 18 which then requests the hearing 10A to generate - after user verification - a public-private key pair. The private key and other authenticator data (together forming the "authentication data") resulting from the request of the client 18 (the authenticator data may include relying party ID and info, user info, etc.) are stored on both the hearing device 10A and the hearing device 10B and an attestation object (including the public key of the public-private key pair, a credential ID and attestation including a signature by the hearing device 10A using the private key) is sent from the hearing device 10A to the client 18 which then is sent from the client 18, together with client data to the relying party 16. The relying party 16 verifies the attestation object, in particular the signature by using the public key, and then registers the hearing system 10 as a single authenticator, which applies to either one of the hearing devices 10A, 10B. It is to be understood that the registration procedure also could utilize the hearing device 10B instead of the hearing device 10A.

The lower part of Fig. 2 illustrates a client authentication procedure using hearing device 10B, which is similar to the scheme illustrated in Fig. 1. The client 18, after having requested client authentication on behalf of the user 12 at the relying party 16, sends a challenge, including relying party ID and client data hash, to the hearing device 10B which thereupon performs a user verification, e.g. by detecting physical proximity of the user 12 to the hearing device 10B, and, after successful verification, creates a new assertion by signing over the client data hash and authenticator data using the stored private key generated during the above registration with the relying party 16. Thereafter the authenticator data is synchronized with the other hearing device 10A and stored on both hearing devices 10A, 10B (for example, a signature counter of the authenticator data will have been incremented by the signing operation). The authenticator data and the assertion signature is sent to the client 16 which sends an authenticator assertion response to the relying party 16, including client data, authenticator data and the assertion signature. The relying party 16 then verifies the authenticator assertion response by verifying the signature, using the public key and, if verification is successful, sends an access token to the client 18. It is to be understood that the client authentication procedure also could use the hearing device 10A instead of the hearing device 10B.

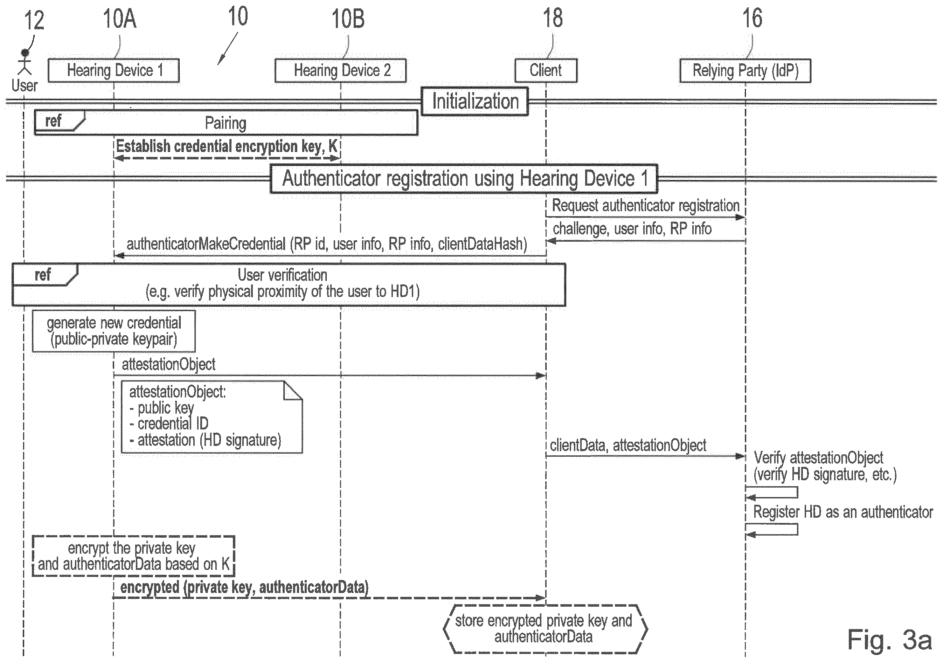

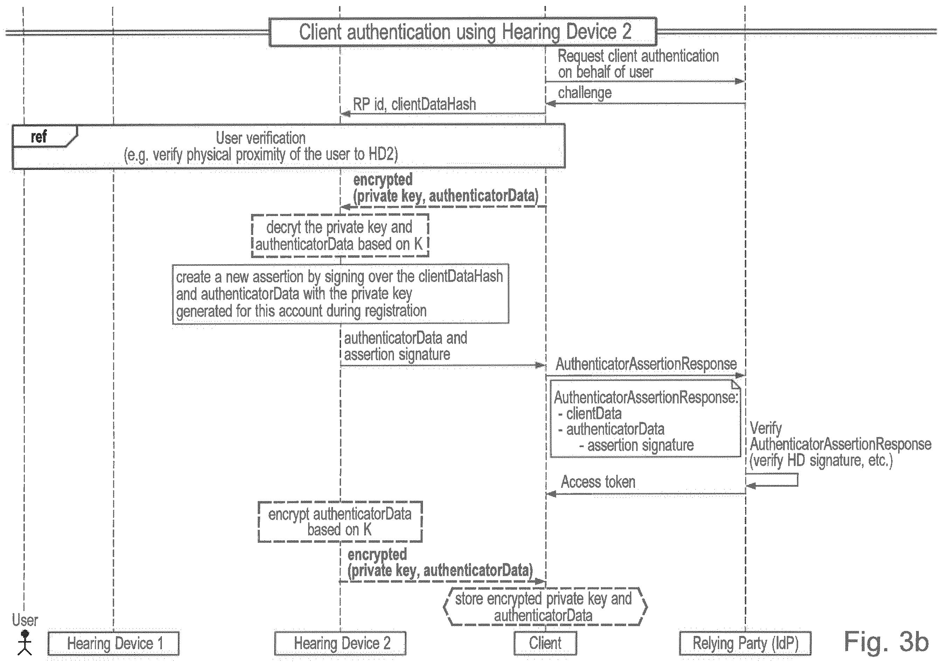

In the example of Fig. 3 the authentication data, including the private key, is encrypted by the hearing devices 10A, 10B based on a credential encryption key and is stored on the client 18. Further, the authentication data is synchronized between the hearing devices 10A, 10B via the client 18.

Pairing between the hearing devices 10A and 10B precedes the registration procedure in an initialization procedure, so as to establish a credential encryption key shared by the hearing devices 10A, 10B for later encrypting the authentication data (here: the private key and the authenticator data) by the hearing device 10A after the public-private key pair has been generated by the hearing device 10A and the attestation object has been generated by the hearing device 10A and sent to the client 18. The encrypted private key and authenticator data is sent to and stored on the client 18.

As in the example of Fig.2, the client 18 uses the hearing device 10B for authentication, with the hearing device 10B sending the encrypted private key and authenticator data to the hearing device 10B which then decrypts the private key and authenticator data using the shared credential encryption key. At the end of the authentication procedure the hearing device 10B encrypts the private key and the authenticator data, using the shared credential encryption key, and sends the encrypted private key and authenticator data to the client 18 for storing.

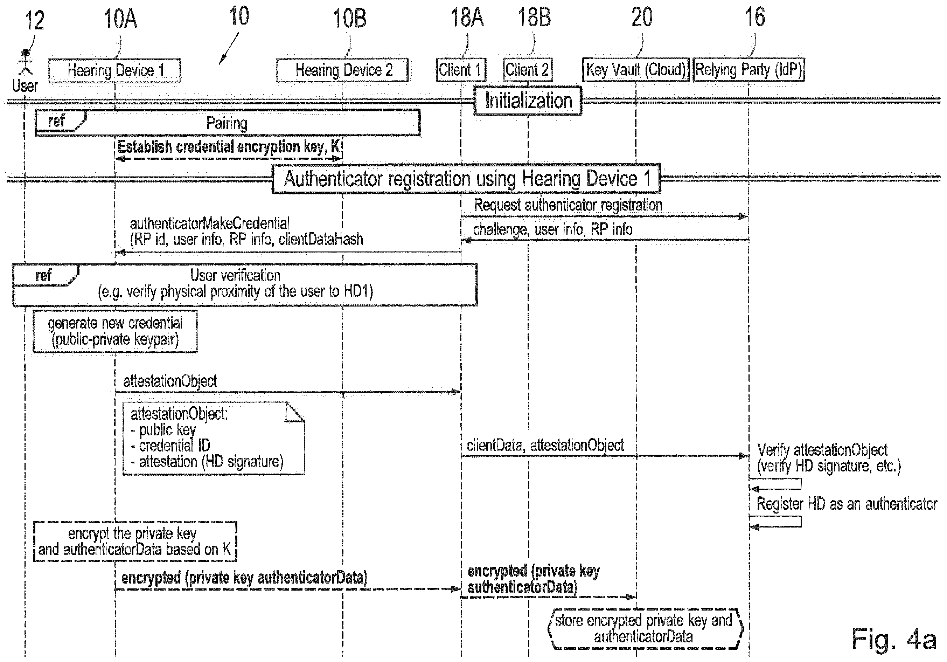

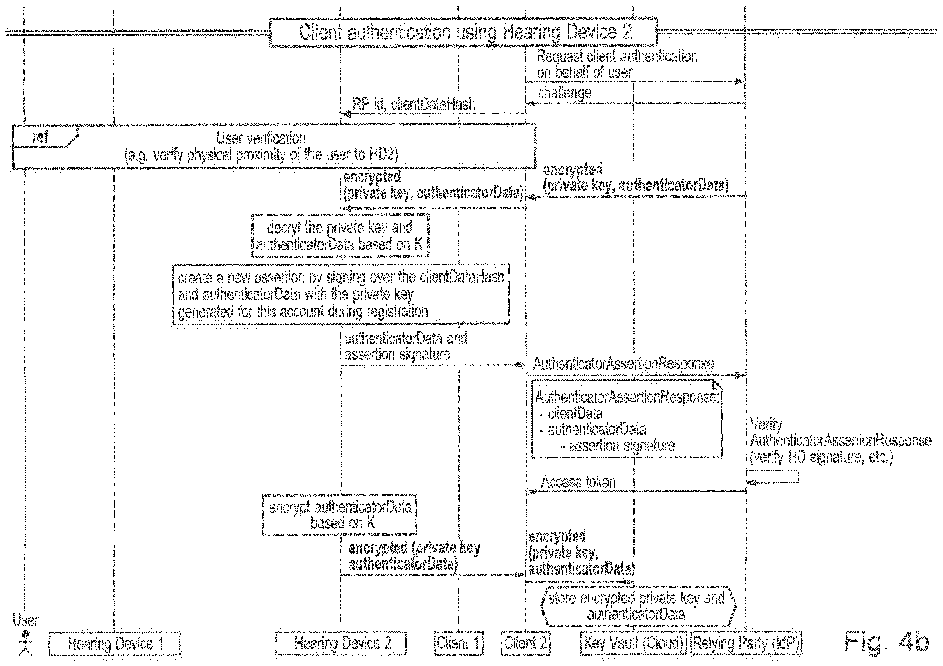

The example of Fig. 4 is a variation of the example of Fig. 3, wherein, like in Fig. 3, the authentication data, including the private key, is encrypted by the hearing devices 10A, 10B, but is stored in a cloud 20 rather than on the client 18. Further, there are two clients 18A, 18B rather than a single client 18. Accordingly, the authentication data is synchronized between the clients 18A, 18B and the hearing devices 10A, 10B via the cloud 20. The clients 18A, 18B act as a relay between the cloud 20 and the hearing devices 10A, 10B.

Figs. 5 to 7 illustrate examples of the second aspect, i.e., both hearing devices are used for the authentication as the single authenticator, wherein physical proximity of the two hearing devices is detected.

In the example of Fig. 5 physical proximity of hearing devices 10A, 10B to each other and to the user 12 is verified both in the registration procedure and the authentication procedure, with only one of the two hearing devices (here: hearing device 10A) communicating with the client 18 and thus being actively involved in the registration procedure and the authentication procedure. The other hearing device 10B is involved in the registration procedure and the authentication procedure due to the physical proximity requirement. The private key is stored on one of the hearing devices (here: hearing device 10A).

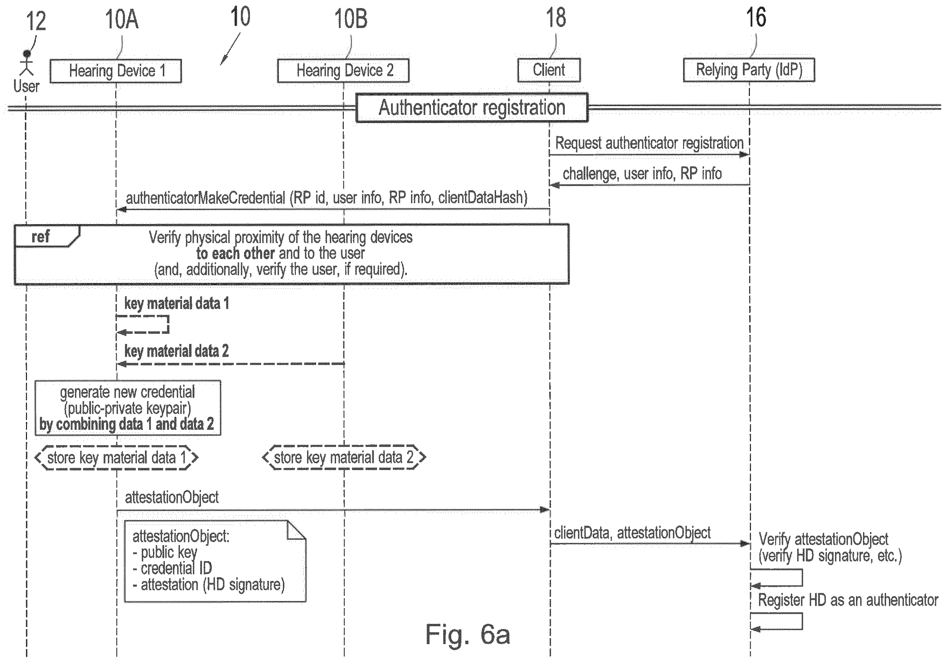

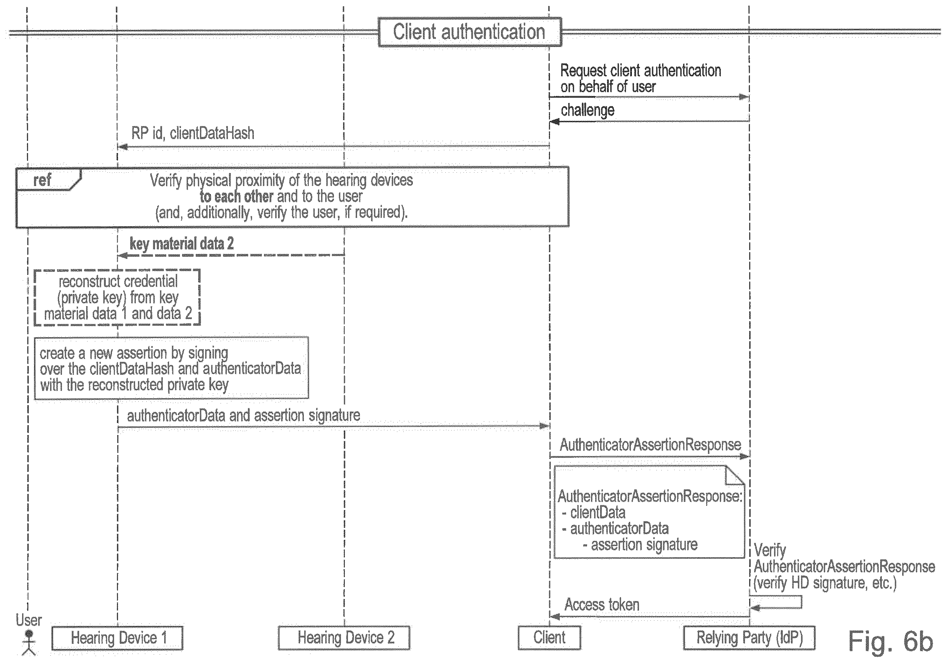

Also in the example of Fig. 6, physical proximity of hearing devices 10A, 10B to each other and to the user 12 is verified both in the registration procedure and the authentication procedure. However, in the example of Fig. 6 the private key is (re-)constructed from contributions of key material data from both hearing devices 10A, 10B, so that in this example both hearing devices have an "active" role in the registration procedure and the authentication procedure. The key material parts are stored on the respective hearing device 10A, 10B after generating the public-private key in the registration procedure, and the "missing" key material part is sent in the authentication procedure from the respective hearing device on which it has been stored in the registration procedure (here: hearing device 10B) to the hearing device doing the signature (here hearing device 10A).

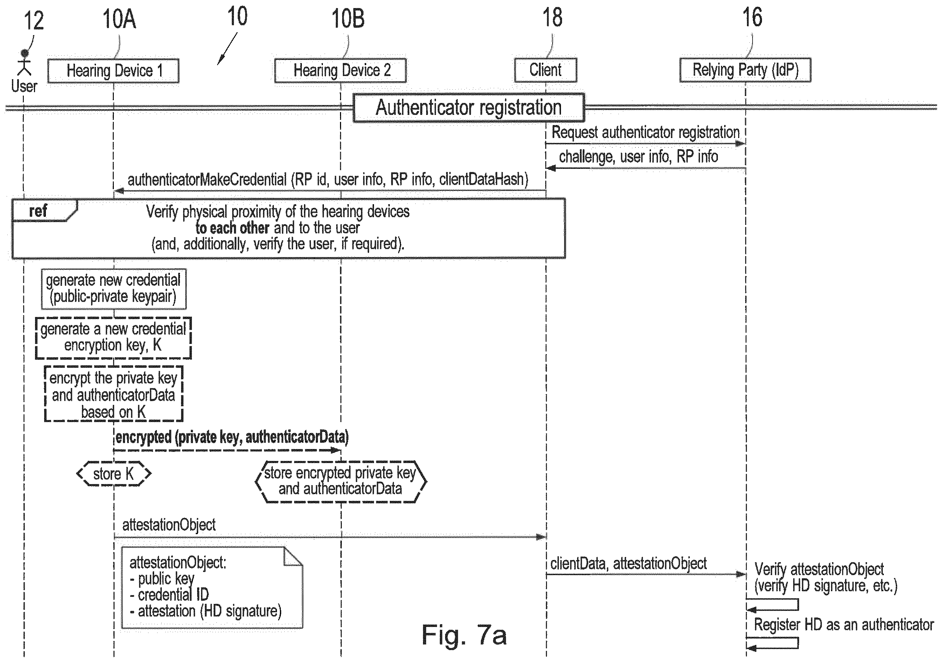

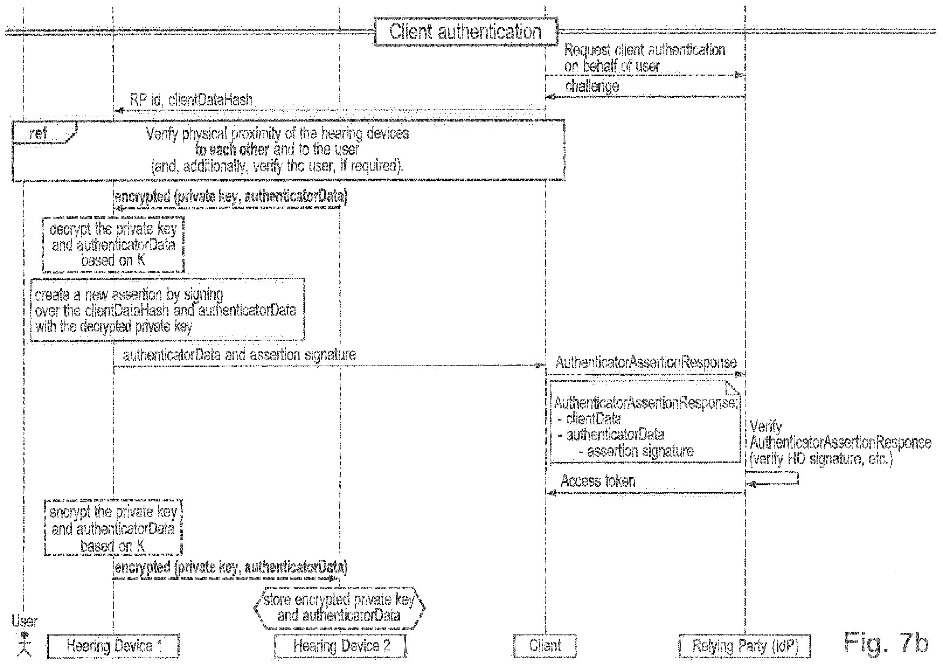

Fig. 7 illustrates a variation of the examples of Figs. 5 and 6, wherein the private key is generated by one of the hearing devices (here: hearing device 10A) and then is encrypted and sent for storage to other hearing device (here: hearing device 10B) in the registration procedure, while it is not stored on the hearing device which has generated the private key. In the authentication procedure the encrypted private key is sent from the hearing device 10B to the other hearing device 10A which decrypts the private key and uses it then for signing. After signing, the hearing device 10A encrypts the private key again and sends it to the other hearing device 10B for storage. Thus, in the example of Fig. 7 both hearing devices have an "active" role in the sense that both hearing devices have to cooperate for registration and authentication. It is noted that not only the private key but also the authenticator data is encrypted/decrypted.

## Claims

1. A method for authenticating a user (12) of a binaural hearing system (10) comprising two hearing devices (10A, 10B), the method comprising:
registering the binaural hearing system with a relying party (16) as a single authenticator for authenticating the user, thereby generating authentication data;
synchronizing the two hearing devices regarding the authentication data; and
using either one of the two hearing devices as the single authenticator by utilizing the authentication data to authenticate the user to the relying party in response to a request by the relying party.

2. The method of claim 1, wherein only one or both of the hearing devices is/are involved in said registering of the binaural hearing system and, wherein said registering of the binaural hearing system includes a verification that the user (12) presently has physical access to the hearing device(s) (10A, 10B) involved in said registering.

3. The method of one of the preceding claims, wherein said using either one of the hearing devices (10A, 10B) as the single authenticator includes a verification that the user (12) presently has physical access to the hearing device that is used as the single authenticator.

4. The method of claim 2 or 3, wherein said verification that the user (12) presently has physical access to the hearing device(s) (10A, 10B) includes at least one of: a detection that the respective hearing device (10A, 10B) is worn in an ear and/or a biometric detection that the respective hearing device is worn in a predetermined ear, and an action from the user on the respective hearing device, such as a button press, in response to a notification to the user.

5. The method of one of the preceding claims, wherein said synchronizing of the two hearing devices (10A, 10B) regarding the authentication data occurs via direct communication between the two hearing devices, or wherein said synchronizing of the two hearing devices (10A, 10B) regarding the authentication data occurs via a client (18, 18A, 18B) communicating with each of the two hearing devices and with the relying party (16), or wherein said synchronizing of the two hearing devices (10A, 10B) regarding the authentication data occurs via a cloud service (20).

6. The method of one of the preceding claims, wherein the authentication data includes an authentication key which is used to sign data transmitted from the hearing devices (10A, 10B) to the relying party (16), and wherein the authentication key is stored on both hearing devices (10A, 10B) or wherein the authentication key is encrypted by one of the hearing devices (10A, 10B) and then stored on a client (18) or in a cloud (20).

7. The method of claim 6, wherein the authentication key is the private key of a public-private key pair generated by one of the hearing devices (10A, 10B) during said registering

8. A method for authenticating a user (12) of a binaural hearing system (10) comprising two hearing devices (10A, 10B), the method comprising:
registering the binaural hearing system (10) with a relying party (16) as a single authenticator for authenticating the user, thereby generating authentication data;
using both hearing devices as the single authenticator by utilizing the authentication data to authenticate the user to the relying party in response to a request by the relying party, wherein said using both hearing devices as the single authenticator includes detecting a physical proximity of the two hearing devices.

9. The method of claim 8, wherein the registering of the binaural hearing system (10) includes a verification that the user (12) presently has physical access to both hearing devices (10A, 10B).

10. The method of one of claims 8 and 9, wherein said using both hearing devices (10A, 10B) as the single authenticator includes a verification that the user (129 presently has physical access to both hearing devices.

11. The method of one of claims 9 and 10, wherein said verification that the user (12) presently has physical access to both hearing devices (10A, 10B) includes at least one of:
a detection that each hearing device is worn in an ear,
a biometric detection that each hearing device is worn in a predetermined ear,
a detection that a sensor signal detected by each of the hearing devices, such as a heartbeat detected by PPG sensor and/or a motion detected by an accelerometer, is correlated or synchronous; and.
an action from the user on the respective hearing device, such as a button press, in response to a notification to the user.

12. The method of one of claims 8 to 11, wherein said detecting a physical proximity of the two hearing devices (10A, 10B) includes at least one of:
detecting wireless connectivity between the hearing devices,
measuring a distance between the two hearing devices, such as via GPS or via a distance bounding protocol of a wireless connection between the hearing devices, and detecting that the measured distance is below a distance threshold,
detecting that the two hearing devices are connected to the same charging device, and
detecting that the two hearing devices listen to the same ambient sound.

13. The method of one of claims 8 to 12, wherein the authentication data includes an authentication key which is used to sign data transmitted from the hearing devices (10A, 10B) to the relying party (16).

14. The method of claim 13, wherein the authentication key is the private key of a public-private key pair generated by one of the hearing devices (10A, 10B) during said registering, and wherein the authentication key is stored on that one of the hearing devices (10A, 10B) which generates the key or wherein the authentication key is encrypted by that one of the hearing devices (10A, 10B) which generates the key and then is transmitted to the other one of the hearing devices where it is stored.

15. The method of one of the preceding claims, wherein communication between the hearing devices (10A, 1 0B) and the relying party (16) occurs via a client (18, 18A, 18B) which preferably is implemented as an app on a smartphone or on a personal computer.
